# EUROPÄISCHE PATENTSCHRIFT

(11) **EP 2 524 156 B1**
(45) Veröffentlichungstag und Bekanntmachung des Hinweises auf die Patenterteilung: **21.01.2015**
(21) Anmeldenummer: 10800736.0
(22) Anmeldetag: 21.12.2010
(51) Int. Cl.: F16H 61/686, F16H 61/04, F16H 3/66

(54) **VERFAHREN ZUM BETREIBEN EINER GETRIEBEVORRICHTUNG MIT MEHREREN REIBSCHLÜSSIGEN SCHALTELEMENTEN UND WENIGSTENS EINEM FORMSCHLÜSSIGEN SCHALTELEMENT**
METHOD FOR OPERATING A TRANSMISSION DEVICE HAVING A PLURALITY OF FRICTION-FIT SHIFT ELEMENTS AND AT LEAST ONE FORM-FIT SHIFT ELEMENT
PROCÉDÉ POUR FAIRE FONCTIONNER UN DISPOSITIF DE TRANSMISSION COMPRENANT PLUSIEURS ÉLÉMENTS DE CHANGEMENT DE VITESSE À FRICTION ET AU MOINS UN ÉLÉMENT DE CHANGEMENT DE VITESSE À COMPLÉMENTARITÉ DE FORME

(30) Priorität: 13.01.2010 DE 102010000859
(43) Veröffentlichungstag der Anmeldung: 21.11.2012
(73) Patentinhaber: ZF Friedrichshafen AG, 88038 Friedrichshafen (DE)
(72) Erfinder: HERBETH, Valentine, 88045 Friedrichshafen (DE); ARNOLD, Jörg, 88090 Immenstaad (DE); MIHATSCH, Georg, 88131 Lindau (DE); SCHMIDT, Andreas, 88213 Bavendorf (DE); SCHMIDT, Thilo, 88074 Meckenbeuren (DE); DIOSI, Gabor, 88045 Friedrichshafen (DE); MARGRAF, Christoph, 88682 Salem (DE)
(86) Internationale Anmeldenummer: PCT/EP2010/070385
(87) Internationale Veröffentlichungsnummer: WO 2011/085925

(56) Entgegenhaltungen:
- EP-A2- 0 992 706
- DE-A1- 10 244 023
- DE-A1-102008 000 429
- GB-A- 2 335 010

## Beschreibung

Die Erfindung betrifft ein Verfahren zum Betreiben einer Getriebevorrichtung mit mehreren reibschlüssigen Schaltelementen und wenigstens einem formschlüssigen Schaltelement gemäß der im Oberbegriff des Patentanspruches 1 näher definierten Art.

Üblicherweise sind aus der Praxis bekannte Fahrzeugantriebsstränge jeweils mit einer Brennkraftmaschine und wenigstens einer zwischen der Brennkraftmaschine und einem Abtrieb angeordneten Getriebevorrichtung ausgebildet, mittels der jeweils betriebszustandsabhängig angeforderte Übersetzungen zur Verfügung stellbar sind.

Derartige an sich bekannte und als Automatgetriebe ausgeführte Getriebevorrichtungen sind zum Darstellen verschiedener Übersetzungen mit Schaltelementen ausgebildet, über welche jeweils ein anliegendes Drehmoment reibschlüssig übertragbar ist. Bei Vorliegen einer Anforderung zum Darstellen einer definierten Übersetzung werden jeweils wenigstens eines oder mehrere der reibschlüssigen Schaltelemente aus dem Kraftfluss einer Getriebevorrichtung abgeschaltet, während wenigstens ein weiteres oder weitere reibschlüssige Schaltelemente zur Darstellung der angeforderten Übersetzung in den Kraftfluss einer Getriebevorrichtung zugeschaltet werden. Während des Zuschaltvorganges eines reibschlüssigen Schaltelementes sind zur Gewährleistung eines gewünschten Schaltkomforts sowie einer zugkraftunterbrechungsfreien Schaltung keine besonderen Synchronisiermaßnahmen erforderlich, da ein angestrebter Schaltkomfort und auch eine zugkraftunterbrechungsfreie Schaltung mittels reibschlüssigen Schaltelementen bei definierten Anpressdrücken innerhalb eines breiten Differenzdrehzahlbandes realisierbar sind.

Da solche Getriebevorrichtungen in an sich bekannter Art und Weise auf Grund von im Bereich von geöffneten reibschlüssigen Schaltelementen auftretenden Schleppverlusten mit nur unzureichenden Wirkungsgraden betreibbar sind, werden bestimmte reibschlüssige Schaltelemente durch formschlüssige Schaltelemente ersetzt. Bei Automatgetrieben, die sowohl mit reibschlüssigen Schaltelementen als auch mit mindestens einem formschlüssigen Schaltelement und mit einer entsprechenden Radsatzkonstruktion ausgeführt sind, ist zur Umsetzung einer definierten Schaltanforderung mindestens ein formschlüssiges Schaltelement in einen Kraftfluss der Getriebevorrichtung zuzuschalten.

Nachteilhafterweise besteht in Abhängigkeit der konstruktiven Anordnungen der Schaltelemente während der Durchführung einer Anforderung für einen Betriebszustandswechsel der Getriebeeinrichtung, während welcher ein zugeschaltetes formschlüssiges Schaltelement in einen geöffneten Betriebszustand zu überführen ist, die Möglichkeit, dass das formschlüssige Schaltelement aufgrund hoher Schleppmomente, die im Bereich von geöffneten reibschlüssigen Schaltelementen auftreten, und/oder wegen eines anliegenden Drehmomentes während einer vorzugsweise zugkraftunterbrechungsfreien Rückschaltung nicht innerhalb einer akzeptablen Schaltzeit bei gleichzeitig hohem Schaltkomfort offenbar ist.

Der vorliegenden Erfindung liegt daher die Aufgabe zugrunde, ein Verfahren zum Betreiben einer Getriebevorrichtung zur Verfügung zu stellen, mittels welchem Schaltungen in Getriebevorrichtungen, an welchen wenigstens ein formschlüssiges Schaltelement beteiligt ist, vorzugsweise zugkraftunterbrechungsfrei und mit hohem Schaltkomfort innerhalb vordefinierter Schaltzeiten durchführbar sind.

Erfindungsgemäß wird diese Aufgabe mit einem Verfahren mit den Merkmalen des Patentanspruches 1 gelöst.

Bei dem erfindungsgemäßen Verfahren zum Betreiben einer Getriebevorrichtung mit vier Planetenradsätzen und sechs Schaltelementen zum selektiven Schalten von neun Vorwärtsgängen und einem Rückwärtsgang, wobei unter den sechs Schaltelementen zwei formschlüssige Schaltelemente sind, werden zum Herstellen eines Kraftflusses in der Getriebevorrichtung jeweils gleichzeitig drei Schaltelemente in einem geschlossenen Betriebszustand gehalten. Hierbei wird ein erstes formschlüssiges Schaltelement bei einem angeforderten Betriebszustandswechsel der Getriebevorrichtung, während dem das erste formschlüssige Schaltelement aus einem geschlossenen in einen geöffneten Betriebszustand überführt wird, durch Anheben der Übertragungsfähigkeit wenigstens eines reibschlüssigen Schaltelementes wenigstens annähernd in einen lastfreien Zustand überführt und in diesem in seinen geöffneten Betriebszustand überführt. Das reibschlüssige Schaltelement ist hierbei weder zur Darstellung eines aktuellen Betriebszustandes noch zur Darstellung eines angeforderten Betriebszustandes in den Kraftfluss der Getriebevorrichtung zuzuschalten.

Damit wird das wenigstens eine zu öffnende formschlüssige Schaltelement ohne zusätzliche konstruktive Maßnahmen durch einen entsprechenden Betrieb von in der Getriebevorrichtung bereits vorhandenen Einrichtungen, d. h. vorliegend mittels wenigstens einem reibschlüssigen Schaltelement, effektiv, kostengünstig und mit geringem Bauraumbedarf der Getriebevorrichtung während eines angeforderten Betriebszustandswechsels der Getriebevorrichtung bzw. während einer angeforderten Schaltung in der Getriebevorrichtung in einen wenigstens annähernd lastfreien Betriebszustand überführt, so dass Betriebszustandswechsel bzw. Schaltungen mit geringen Schaltkräften mit einem gewünschten Schaltkomfort bei gleichzeitig akzeptablen Schaltzeiten oder innerhalb vordefinierter Schaltzeiten sicher und vorzugsweise sogar zugkraftunterbrechungsfrei durchführbar sind.

Bei dem erfindungsgemäßen Verfahren wird das formschlüssige Schaltelement in wenigstens annähernd lastfreiem Betriebszustand in seinen geöffneten Betriebszustand überführt, womit ein hoher Schaltkomfort bei gleichzeitig geringen mechanischen Belastungen im Bereich des formschlüssigen Schaltelementes erreicht wird.

Die Übertragungsfähigkeit des reibschlüssigen Schaltelementes wird bei einer weiteren vorteilhaften Variante des erfindungsgemäßen Verfahrens wenigstens annähernd zum Öffnungszeitpunkt des formschlüssigen Schaltelementes, vorzugsweise auf Null, abgesenkt, um den angeforderten Betriebszustand der Getriebevorrichtung ohne Verzögerungen darstellen zu können.

Die Übertragungsfähigkeit des reibschlüssigen Schaltelementes wird bei einer weiteren vorteilhaften Variante des Verfahrens nach der Erfindung in Abhängigkeit einer Betriebstemperatur der Getriebevorrichtung variiert, um einen angeforderten Betriebszustandswechsel jeweils an den aktuellen Betriebszustand der Getriebevorrichtung angepasst durchführen zu können.

Das formschlüssige Schaltelement, das bei Vorliegen einer Anforderung für eine Zugrückschaltung zur Darstellung der angeforderten Ziel-Übersetzung abzuschalten ist, wird bei einer weiteren vorteilhaften Variante des erfindungsgemäßen Verfahrens durch Anheben der Übertragungsfähigkeit wenigstens eines reibschlüssigen Schaltelementes, welches weder zur Darstellung des aktuellen Betriebszustands der Getriebevorrichtung noch zur Darstellung des angeforderten Betriebszustandes in den Kraftfluss der Getriebevorrichtung zuzuschalten ist, vor der Abschaltung in einen wenigstens annähernd lastfreien Betriebszustand überführt. Damit ist eine angeforderte Zugrückschaltung innerhalb einer vordefinierten Schaltzeit zugkraftunterbrechungsfrei sicher durchführbar und eine Getriebevorrichtung mit einem reproduzierbaren Betriebsverhalten zur Verfügung stellbar.

Die Übertragungsfähigkeit eines während der Darstellung der Ist-Übersetzung abgeschalteten und zur Darstellung der angeforderten Ziel-Übersetzung zuzuschaltenden reibschlüssigen Schaltelementes wird bei einer weiteren Variante des Verfahrens nach der Erfindung bei Vorliegen einer Getriebeeingangsdrehzahl, die wenigstens annähernd einer mit der angeforderten Ziel-Übersetzung korrespondierenden Synchrondrehzahl entspricht, angehoben, nachdem das abzuschaltende formschlüssige Schaltelement in einen geöffneten Betriebszustand überführt wurde.

Sowohl die in den Patentansprüchen angegebenen Merkmale als auch die in den nachfolgenden Ausführungsbeispielen des erfindungsgemäßen Gegenstandes angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Ausführungsformen des erfindungsgemäßen Gegenstandes ergeben sich aus den Patentansprüchen und den nachfolgend unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Es zeigt:
- Fig. 1: eine stark schematisierte Darstellung eines Fahrzeugantriebsstranges;
- Fig. 2: ein Räderschema einer Getriebevorrichtung des Fahrzeugantriebsstranges gemäß Fig. 1;
- Fig. 3: ein Schaltschema der Getriebevorrichtung gemäß Fig. 2 in tabellarischer Form;
- Fig. 4: mehrere Verläufe verschiedener Betriebszustandsparameter der Getriebevorrichtung gemäß Fig. 2 während der Durchführung eines angeforderten Betriebszustandswechsels der Getriebevorrichtung; und
- Fig. 5: verschiedene Verläufe von Betriebszustandsparametern während eines eine weitere Schaltung umfassenden Betriebszustandsverlaufes einer gegenüber der Getriebevorrichtung gemäß Fig. 2 geänderten zweiten Ausführungsform der Getriebevorrichtung.

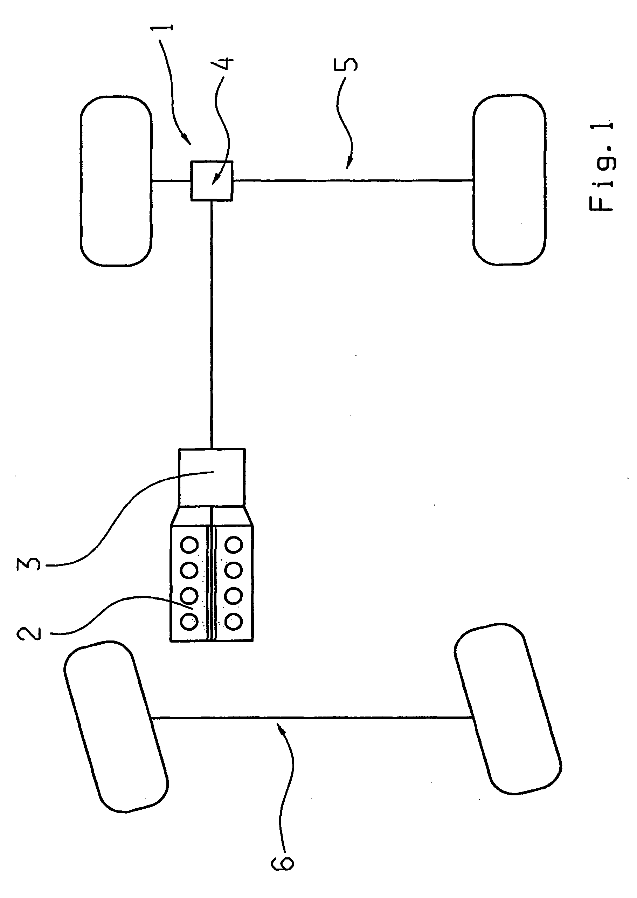

In Fig. 1 ist ein Fahrzeugantriebsstrang 1 mit einer vorliegend als Brennkraftmaschine ausgebildeten Antriebsmaschine 2, mit einer Getriebevorrichtung 3, mittels welchen verschiedene Übersetzungen für Vorwärts- und Rückwärtsfahrt darstellbar sind, mit einer Differentialgetriebeeinheit 4 und mit zwei Fahrzeugachsen 5, 6 dargestellt, wobei die Fahrzeugachse 5 vorliegend die Fahrzeughinterachse und die Fahrzeugachse 6 die Fahrzeugvorderachse ist.

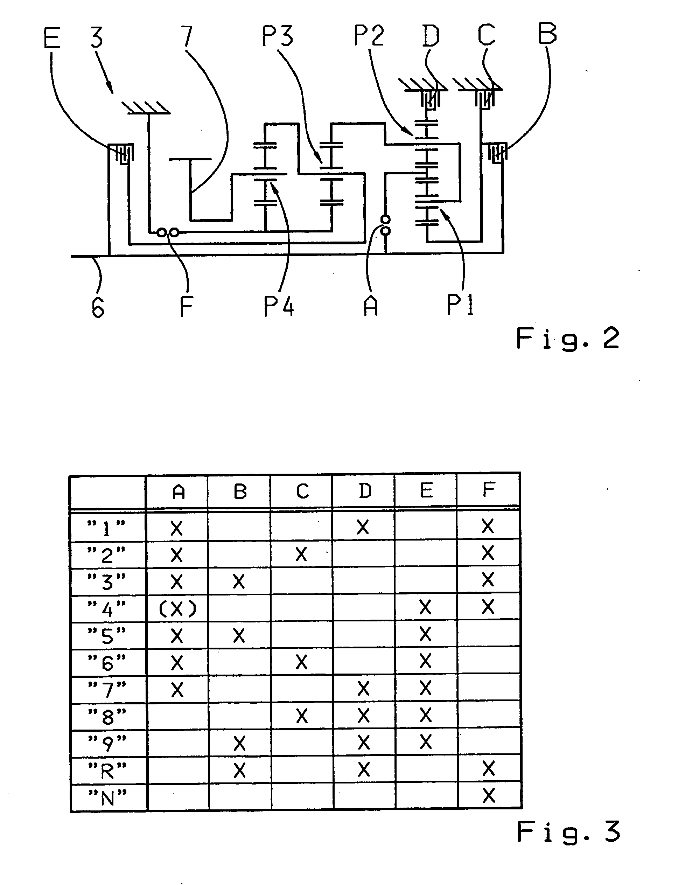

Ein Räderschema der Getriebevorrichtung 3 bzw. eines Mehrstufengetriebes, welches grundsätzlich aus der gattungsbildenden Druckschrift DE102008000429A1 der Anmelderin bekannt ist, ist in Fig. 2 dargestellt. Die Getriebevorrichtung 3 umfasst eine Getriebeeingangswelle 6 und eine Getriebeausgangswelle 7, welche in in einem Fahrzeug montiertem Zustand mit der Differentialgetriebeeinheit 4 verbunden ist, während die Getriebeeingangswelle 6 mit der Antriebsmaschine 2 wirkverbunden ist.

Darüber hinaus umfasst die Getriebevorrichtung 3 vier Planetenradsätze P1 bis P4, wobei der erste und der zweite Planetenradsatz P1, P2, die vorzugsweise als Minus-Planetensätze ausgebildet sind, einen schaltbaren Vorschaltradsatz bilden, während der dritte und der vierte Planetenradsatz P3, P4 den Hauptradsatz darstellen. Zusätzlich umfasst die Getriebevorrichtung 3 sechs Schaltelemente A bis F, wovon die Schaltelemente C, D und F als Bremsen und die Schaltelemente A, B und E als Schaltkupplungen ausgeführt sind.

Mit den Schaltelementen A bis F ist ein selektives Schalten von neun Vorwärtsgängen "1" bis "9" und einem Rückwärtsgang "R" realisierbar, wobei bis auf die vierte Übersetzungsstufe "4" zur Darstellung einer Übersetzung in der Getriebevorrichtung 3 bzw. zum Herstellen eines Kraftflusses in der Getriebevorrichtung 3 jeweils gleichzeitig drei Schaltelemente zu halten sind. Um die Getriebevorrichtung 3 mit einer hohen Spontaneität betreiben zu können, wird das Schaltelement A während der Darstellung der vierten Übersetzungsstufe "4" ebenfalls in geschlossenem Betriebszustand gehalten, obwohl dies zur Darstellung der vierten Übersetzungsstufe "4" nicht erforderlich ist.

Die Schaltelemente A und F sind vorliegend als formschlüssige Schaltelemente ausgebildet, um im Betrieb der Getriebevorrichtung 3 im Vergleich zu Getriebevorrichtungen, die nur mit reibschlüssigen Schaltelementen ausgebildet sind, durch geöffnete reibschlüssige Schaltelemente verursachte Schleppmomente zu reduzieren. Da formschlüssige Schaltelemente im Allgemeinen nur innerhalb eines sehr schmalen Differenzdrehzahlbandes um die Synchrondrehzahl herum aus einem geöffneten Betriebszustand in einen geschlossenen Betriebszustand überführbar sind, wird die Synchronisierung eines zuzuschaltenden formschlüssigen Schaltelementes ohne zusätzliche konstruktive Ausführungen durch geeignete Betätigung der reibschlüssigen Schaltelemente und der Antriebsmaschine unterstützt bzw. vollständig realisiert.

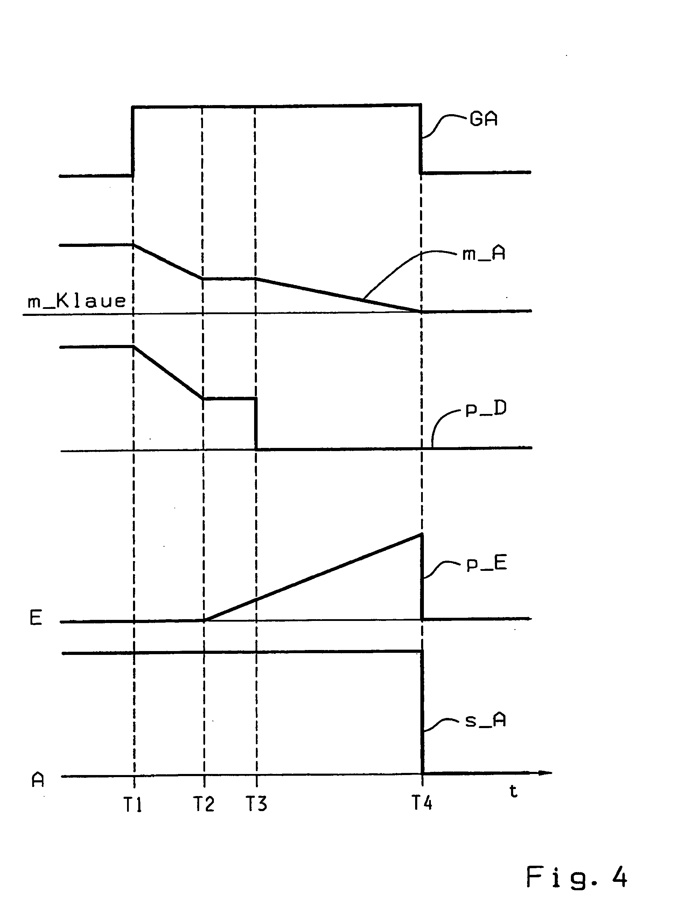

Nachfolgend wird die Wirkungsweise einer Variante des erfindungsgemäßen Verfahrens anhand verschiedener in Fig. 4 über der Zeit t näher dargestellten Betriebszustandsverläufe mehrerer Betriebsparameter der Getriebevorrichtung 3 gemäß Fig. 2 näher erläutert.

Zu einem Zeitpunkt T1 ist in der Getriebevorrichtung 3 die erste Übersetzungsstufe "1" eingelegt, wobei die beiden formschlüssigen Schaltelemente A und F und zusätzlich das reibschlüssige Schaltelement D in einem vollständig geschlossenen Betriebszustand vorliegen. Zum Zeitpunkt T1 ergeht eine Anforderung für einen Betriebszustandswechsel bzw. für eine Schaltung ausgehend von der ersten Übersetzungsstufe "1" in einen Neutralbetriebszustand "N" der Getriebevorrichtung 3, weshalb ein Verlauf GA einen Statuswechsel erfährt.

Im Neutralbetriebszustand "N" ist über die Getriebevorrichtung 3 im Wesentlichen kein Antriebsmoment von der Getriebeeingangswelle 6 in Richtung der Getriebeausgangswelle 7 oder in umgekehrter Richtung führbar. Hierfür sind das reibschlüssige Schaltelement D und das formschlüssige Schaltelement A zu öffnen, während das formschlüssige Schaltelement F zur Verkürzung von Schaltzeiten der Getriebevorrichtung 3 weiterhin in geschlossenem Betriebszustand gehalten wird. Da das formschlüssige Schaltelement F sowohl zur Darstellung der Übersetzung "R" für Rückwärtsfahrt als auch zur Darstellung der ersten Übersetzung "1" für Vorwärtsfahrt in geschlossenem Betriebszustand vorliegt und dann jeweils nur die Schaltelemente A und D oder die Schaltelemente B und D zu schließen sind, ist die Getriebevorrichtung 3 mit hoher Spontaneität betreibbar.

Zur Umsetzung der Schaltanforderung von der ersten Übersetzungsstufe "1" für Vorwärtsfahrt in den Neutralbetriebszustand "N" wird zunächst das reibschlüssige Schaltelement D geöffnet. Gleichzeitig ist das formschlüssige Schaltelement A in seinen geöffneten Betriebszustand zu überführen, wobei der Schaltvorgang ausgehend von der ersten Übersetzungsstufe "1" in den Neutralbetriebszustand "N" bei vollständig geöffneten Schaltelementen A und D beendet ist.

Insbesondere bei sehr kalten Umgebungstemperaturen der Getriebevorrichtung 3 und daraus resultierenden niedrigen Betriebstemperaturen der Getriebevorrichtung 3 führen im Bereich der geöffneten reibschlüssigen Schaltelemente B, C und E auftretende Schleppmomente in der Getriebevorrichtung 3 dazu, dass das zu öffnende formschlüssige Schaltelement A nicht innerhalb einer gewünschten Schaltzeit in seinen abgeschalteten Betriebszustand überführbar ist, ohne im Fahrzeugantriebsstrang 1 einen Fahrkomfort beeinträchtigende Reaktionsmomente durch ein sogenanntes Aufreißen des Schaltelementes A zu erzeugen.

Dies resultiert aus der Tatsache, dass die in der Getriebevorrichtung 3 auftretenden Schleppmomente im Bereich des zu öffnenden formschlüssigen Schaltelementes A abgestützt werden und das formschlüssige Schaltelement A nicht in gewünschten Umfang in einem wenigstens annähernd lastfreien Betriebszustand vorliegt, der für eine mit hohem Schaltkomfort durchführbare Schaltung erforderlich ist. In besonders ungünstigen Betriebszuständen der Getriebevorrichtung 3 ist das formschlüssige Schaltelement A daher nur mit hohen Schaltkräften oder überhaupt nicht öffenbar.

Aus diesem Grund wird zum Zeitpunkt T1 die Übertragungsfähigkeit des reibschlüssigen Schaltelementes E durch rampenförmiges Anheben eines Betätigungsdruckes p_E des Schaltelementes E ausgehend von einem vollständig geöffneten Betriebszustand erhöht. Durch die Erhöhung der Übertragungsfähigkeit des Schaltelementes E und das gleichzeitige Absenken eines Betätigungsdruckes p_D des abzuschaltenden reibschlüssigen Schaltelementes D werden die am abzuschaltenden formschlüssigen Schaltelement A anliegenden Schleppmomente m_A zunehmend im Bereich des reibschlüssigen Schaltelementes E abgestützt und das abzuschaltende formschlüssige Schaltelement A weiter entlastet.

Zwischen einem Zeitpunkt T2 und einem Zeitpunkt T3 wird der Betätigungsdruck p_D des abzuschaltenden reibschlüssigen Schaltelementes D konstant gehalten und zum Zeitpunkt T3 auf ein Öffnungsdruckniveau abgesenkt, zu welchem die Übertragungsfähigkeit des abzuschaltenden reibschlüssigen Schaltelementes D im Wesentlichen gleich Null ist.

Bei vollständig geöffnetem reibschlüssigen Schaltelement D und gleichzeitig weiter ansteigender Übertragungsfähigkeit des reibschlüssigen Schaltelementes E werden die am abzuschaltenden formschlüssigen Schaltelement A anliegenden Schleppmomente zunehmend im Bereich des reibschlüssigen Schaltelementes E abgestützt, bis das formschlüssige Schaltelement A zu einem Zeitpunkt T4 im Wesentlichen in einem lastfreien Betriebszustand vorliegt.

Aufgrund der vorzugsweise durch eine Federeinrichtung zur Verfügung gestellten und in Öffnungsrichtung des abzuschaltenden formschlüssigen Schaltelementes A an diesem angreifenden Öffnungskraft wird das formschlüssige Schaltelement A zum Zeitpunkt T4 im Wesentlichen schlagartig geöffnet, wobei im Fahrzeugantriebsstrang 1 keine den Fahrkomfort bzw. einen Schaltkomfort beeinträchtigende Reaktionsmomente erzeugt werden.

Der Betätigungsdruck p_E des zuzuschaltenden reibschlüssigen Schaltelementes E wird zum Öffnungszeitpunkt T4 des abzuschaltenden formschlüssigen Schaltelementes A wiederum auf das zum Zeitpunkt T1 vorliegende Druckniveau abgesenkt, womit der angeforderte Betriebszustandswechsel in der Getriebevorrichtung 3 abgeschlossen ist.

Das Umschalten des formschlüssigen Schaltelementes A aus seinem geschlossenen Betriebszustand in seinen geöffneten Betriebszustand zum Zeitpunkt T4 ist durch einen sich sprungartig verändernden Verlauf s_A in Fig. 4 grafisch dargestellt, wobei der Verlauf s_A der Verstellweg von miteinander formschlüssig in Eingriff bringbaren Schaltelementhälften des formschlüssigen Schaltelementes A ist.

Durch das zumindest teilweise Schließen des reibschlüssigen Schaltelementes E wird in der Getriebevorrichtung 3 bei noch geschlossenem Schaltelement A und ebenfalls geschlossenem formschlüssigen Schaltelement F kurzfristig zumindest wenigstens annähernd die vierte Übersetzungsstufe "4" eingelegt. Das temporäre Zuschalten des reibschlüssigen Schaltelementes E und das damit verbundene zumindest teilweise Einlegen der vierten Übersetzungsstufe "4" in der Getriebevorrichtung 3 führt dazu, dass sich der am noch geschlossenen formschlüssigen Schaltelement A abstützende Teil der Schleppmomente im Wesentlichen auf Null reduziert wird und die formschlüssige Verbindung im Bereich des formschlüssigen Schaltelementes A in einem wenigstens annähernd lastfreien Zustand des Schaltelementes A aufhebbar ist. Somit ist das angeforderte Gangauslegen in der Getriebevorrichtung 3 innerhalb einer vordefinierten Schaltzeit bei gleichzeitig hohem Schaltkomfort realisierbar.

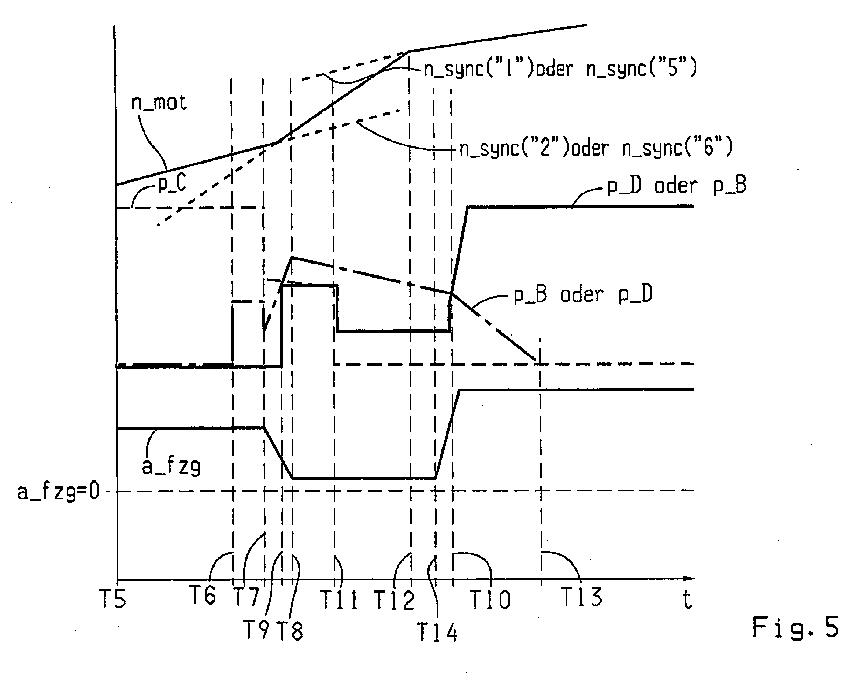

Nachfolgend wird anhand weiterer in Fig. 5 dargestellter Verläufe von Betriebszustandsparametern eine weitere Variante des erfindungsgemäßen Verfahrens beschrieben, welche während einer Zugrückschaltung in einer gegenüber der Getriebevorrichtung 1 gemäß Fig. 1 konstruktiv abgewandelten Getriebevorrichtung 1 durchgeführt wird, wobei bei der zweiten in der Zeichnung nicht näher dargestellten Ausführung der Getriebevorrichtung 1 das Schaltelement C als formschlüssiges Schaltelement ausgeführt ist, das zur Darstellung der durch die Zughochschaltung angeforderten Ziel-Übersetzung in einen geschlossenen Betriebszustand zu führen ist.

Der nachfolgenden Beschreibung liegt somit eine Getriebevorrichtung 1 zugrunde, welche bis auf das Schaltelement C grundsätzlich den gleichen konstruktiven Aufbau wie die Getriebevorrichtung 1 gemäß Fig. 2 aufweist, bei der das Schaltelement C als reibschlüssiges Schaltelement ausgebildet ist. Die verschiedenen Übersetzungsstufen "1" bis "9" für Vorwärtsfahrt und die Übersetzung "R" für Rückwärtsfahrt werden bei der zweiten Ausführung der Getriebevorrichtung 1 mit dem vorzugsweise als Klaue ausgeführten Schaltelement C gemäß der in Fig. 3 dargestellten Schaltlogik in der Getriebevorrichtung 1 eingelegt.

Die in Fig. 5 gezeigten Verläufe der verschiedenen Betriebsparameter stellen sich während einer Zugrückschaltung in der Getriebevorrichtung 1 ein, wenn das formschlüssige Schaltelement C zur Darstellung der angeforderten Ziel-Übersetzung in der Getriebevorrichtung 1 abgeschaltet wird.

Grundsätzlich ist das Schaltelement C zur Darstellung der zweiten Übersetzung "2", der sechsten Übersetzung "6" und der achten Übersetzung "8" in den Kraftfluss der Getriebevorrichtung 1 zuzuschalten und zur Darstellung der weiteren Übersetzungen "1", "3" bis "5", "7" und "9" für Vorwärtsfahrt in einen geöffneten Betriebszustand zu führen bzw. zu halten.

Des Weiteren stellen die in Fig. 5 dargestellten Verläufe rein qualitative Verläufe dar, die eine Zugrückschaltung ausgehend von der Ist-Übersetzung "2" in die Ziel-Übersetzung "1" oder von der Ist-Übersetzung "6" in die Ziel-Übersetzung "5" charakterisieren.

Zu einem Zeitpunkt T5 ist in der Getriebevorrichtung 1 die zweite Übersetzungsstufe "2" oder die sechste Übersetzungsstufe "6" eingelegt. Zu einem zeitlich darauf folgenden weiteren Zeitpunkt T6 liegt eine Anforderung für eine Zugrückschaltung in Richtung der Ziel-Übersetzung "1" oder "5" vor, wobei zur Darstellung der ersten Übersetzung "1" das formschlüssige Schaltelement C abzuschalten und das reibschlüssige Schaltelement D zuzuschalten ist, während die beiden formschlüssigen Schaltelemente A und F in geschlossenem Betriebszustand gehalten werden. Wird durch die Zugrückschaltung als Ziel-Übersetzung die fünfte Übersetzungsstufe "5" angefordert, ist das formschlüssige Schaltelement C abzuschalten und das reibschlüssige Schaltelement B in den Kraftfluss zuzuschalten, während das formschlüssige Schaltelement A und das reibschlüssige Schaltelement E in geschlossenem Betriebszustand gehalten werden.

Nachfolgend wird die weitere Variante des erfindungsgemäßen Verfahrens zunächst während der Durchführung der Zugrückschaltung ausgehend von der zweiten Übersetzungsstufe "2" in Richtung der angeforderten ersten Übersetzung "1" näher beschrieben.

Zum Zeitpunkt T6, zu dem die Anforderung für die Zugrückschaltung vorliegt, wird das reibschlüssige Schaltelement B, welches während der Darstellung der zweiten Übersetzungsstufe "2" im Wesentlichen in seinem geöffneten Betriebszustand vorliegt, während eines sich bis zu einem Zeitpunkt T7 erstreckenden Schnellfüllpuls in einen Betriebszustand überführt, von dem ausgehend ein Anheben des Betätigungsdruckes p_B einen Anstieg der Übertragungsfähigkeit des reibschlüssigen Schaltelementes B bewirkt. Das abzuschaltende formschlüssige Schaltelement C wird durch entsprechendes Anheben der Übertragungsfähigkeit des reibschlüssigen Schaltelementes B wenigstens annähernd in einen lastfreien Betriebszustand überführt.

Hierfür wird der Betätigungsdruck p_B des reibschlüssigen Schaltelementes B nach dem Zeitpunkt T7 über eine bis zu einem weiteren Zeitpunkt T8 andauernde Druckrampe auf einen Druckwert angehoben und während einer sich an die erste Druckrampe anschließenden abfallenden zweiten Druckrampe bis zu einem Zeitpunkt T10 auf ein niedrigeres Druckniveau stetig abgesenkt. Gleichzeitig wird der Betätigungsdruck p_C des abzuschaltenden formschlüssigen Schaltelementes C zu einem Zeitpunkt T9 sprungartig abgesenkt, anschließend bis zu einem Zeitpunkt T11 auf diesem Niveau belassen und wiederum daran anschließend zum Zeitpunkt T10 im Wesentlichen vollständig auf Null geführt.

Die letztbeschriebene Betätigung des reibschlüssigen Schaltelementes B führt dazu, dass eine Getriebeeingangsdrehzahl n_mot der Getriebevorrichtung 1 etwa ab dem Zeitpunkt T8, ausgehend von einer zu der Synchrondrehzahl n_sync("2") der Ist-Übersetzung "2" äquivalenten Drehzahl in Richtung einer zu einer Synchrondrehzahl n_sync("1") der Ziel-Übersetzung "1" äquivalenten Drehzahl geführt wird, wobei die Getriebeeingangsdrehzahl n_mot im Wesentlichen der Synchrondrehzahl n_sync("1") vorliegend zu einem Zeitpunkt T12 entspricht, der nahe bei dem Zeitpunkt T10 liegt.

Ab dem Zeitpunkt T9 wird das zuzuschaltende reibschlüssige Schaltelement D durch entsprechendes Führen des Betätigungsdruckes p_D im Wesentlichen für die Zuschaltung zum Zeitpunkt T10 vorbereitet. Zum Zeitpunkt T10, zu dem die Getriebeeingangsdrehzahl n_mot im Wesentlichen der Synchrondrehzahl n_sync("1") der Ziel-Übersetzung "1" entspricht, wird der Betätigungsdruck p_D des reibschlüssigen Schaltelementes D auf das Schließdruckniveau angehoben und das formschlüssige Schaltelement D geschlossen.

Das formschlüssige Schaltelement C befindet sich aufgrund der vorbeschriebenen Betätigung des reibschlüssigen Schaltelementes B zum Zeitpunkt T11 im Wesentlichen in einem lastfreien Betriebszustand und ist somit auf einfache Art und Weise aus seinem geschlossenen Betriebszustand in seinen geöffneten Betriebszustand überführbar. Der Betätigungsdruck p_B des reibschlüssigen Schaltelementes B wird nach dem Zeitpunkt T10 über eine bis zu einem Zeitpunkt T13 andauernde Druckrampe im Wesentlichen auf Null abgesenkt, womit die angeforderte Zugrückschaltung ausgehend von der zweiten Übersetzungsstufe "2" in Richtung der ersten Übersetzungsstufe "1" als beendet anzusehen ist.

Während der Durchführung der angeforderten Zugrückschaltung stellt sich der in Fig. 5 gezeigte Verlauf der Fahrzeugbeschleunigung a_fzg ein, die zwischen den Zeitpunkten T5 bis T7 zunächst im Wesentlichen konstant ist. Zum Zeitpunkt T7 sinkt die Fahrzeugbeschleunigung a_fzg bis zum Zeitpunkt T9 ab und bleibt anschließend bis zu einem Zeitpunkt T14 auf diesem Niveau.

Ab dem Zeitpunkt T14 steigt die Fahrzeugbeschleunigung a_fzg auf das Niveau der Ziel-Übersetzung "1" an und bleibt im Wesentlichen konstant.

Die zu Fig. 5 beschriebene weitere Variante des erfindungsgemäßen Verfahrens sieht bei einer angeforderten Zugrückschaltung ausgehend von der sechsten Übersetzung "6" in Richtung der fünften Übersetzung "5" vor, dass das reibschlüssige Schaltelement D, welches zum Lastfreischalten des formschlüssigen Schaltelementes C während einer Zugrückschaltung ausgehend von der sechsten Übersetzungsstufe "6" in Richtung der fünften Übersetzungsstufe "5" verwendet wird, im gleichen Umfang wie das zum Lastfreischalten des formschlüssigen Schaltelementes C vorgesehene reibschlüssige Schaltelement B während einer Zugrückschaltung ausgehend von der zweiten Übersetzungsstufe "2" in die erste Übersetzungsstufe "1" betätigt wird.

Aufgrund der zu Fig. 5 beschriebenen weiteren Variante des erfindungsgemäßen Verfahrens sind der mit dem formschlüssigen Schaltelement C ausgeführten Getriebevorrichtung 1 Zugrückschaltungen zugkraftunterbrechungsfrei durchführbar und gleichzeitig Verlustleistungen aufgrund von Schleppmomenten weiter reduziert.

Zugrückschaltungen, während welchen zumindest ein formschlüssiges Schaltelement abzuschalten ist, werden gemäß einer Variante des erfindungsgemäßen Verfahrens als Doppelhochschaltung bzw. als Mehrfachhochschaltung begonnen. Sobald die Getriebeeingangsdrehzahl jeweils in Richtung der Synchrondrehzahl n_sync("1") bzw. n_sync("5") äquivalente Drehzahl geführt wird, wird das zu öffnende formschlüssige Schaltelement C im Wesentlichen in einen lastfreien Betriebszustand überführt und ist dann einfach und zu einem definierten Zeitpunkt in seinen geöffneten Betriebszustand überführbar. Die Übertragungsfähigkeit des die Lastfreischaltung des formschlüssigen Schaltelementes C bzw. die zugkraftunterbrechungsfreie Lastfreischaltung des formschlüssigen Schaltelementes C jeweils gewährleistenden reibschlüssigen Schaltelementes B oder D wird nach dem Abschalten des formschlüssigen Schaltelementes C im Wesentlichen wieder auf Null oder auf einen niedrigen Wert abgesenkt.

Da im Bereich der für die Lastfreischaltung des formschlüssigen Schaltelementes C jeweils vorgesehenen Schaltelemente B und D unter Umständen hohe Reibleistungen auftreten können, sind diese beispielsweise über eine strategiefähige Kühlung und/oder eine entsprechende Getriebeschmierung versorgbar und/oder mit Hochleistungsreibbelägen ausführbar.

Bei der Variante erfindungsgemäßen Vorgehensweise sind formschlüssige Schaltelemente jeweils nur zur Darstellung bis zum n-1 ten Gang einer Getriebevorrichtung mit n-Gangstufen einsetzbar, da jeweils immer ein zur Darstellung des nächst höheren Ganges zuzuschaltendes reibschlüssiges Schaltelement für die Lastfreischaltung des abzuschaltenden formschlüssigen Schaltelementes herangezogen wird, um eine zugkraftunterbrechungsfreie Zugrückschaltung durchführen zu können.

Die erfindungsgemäße Vorgehensweise führt unter Umständen selbst bei einem Verzicht auf den höchstmöglichen Fahrgang bzw. dem Overdrive zu einer Reduzierung eines Kraftstoffverbrauches eines Fahrzeuges, wenn die Reduzierung des Kraftstoffverbrauches alleine aufgrund der Reduzierung der Schleppmomente im Bereich der Schaltelementes höher ist als während eines Betriebes im zusätzlichen Overdrive.

### Bezugszeichen

- 1: Fahrzeugantriebsstrang
- 2: Brennkraftmaschine
- 3: Getriebeeinrichtung
- 4: Differentialgetriebeeinheit
- 5: Fahrzeugachse
- 6: Getriebeeingangswelle
- 7: Getriebeausgangswelle
- "1" bis "9": Übersetzung für Vorwärtsfahrt
- "N": Neutralbetriebszustand der Getriebeeinrichtung
- "R": Übersetzung für Rückwärtsfahrt
- A_fzg: Fahrzeugbeschleunigung
- A bis F: Schaltelement
- GA: Verlauf
- m_A: am Schaltelement A anliegendes Drehmoment
- n_mot: Getriebeeingangsdrehzahl
- n_sync: Synchrondrehzahl
- p_B: Betätigungsdruck des reibschlüssigen Schaltelementes B
- p_C: Betätigungsdruck des formschlüssigen Schaltelementes C
- p_D: Betätigungsdruck des reibschlüssigen Schaltelementes D
- p_E: Betätigungsdruck des reibschlüssigen Schaltelementes E
- s_A: Schaltweg des formschlüssigen Schaltelementes A
- t: Zeit
- T1 bis T14: diskreter Zeitpunkt

## Patentansprüche

1. Verfahren zum Betreiben einer Getriebevorrichtung (3) mit vier Planetenradsätzen (P1, P2, P3, P4) und sechs Schaltelementen (A, B, C, D, E, F) zum selektiven Schalten von neun Vorwärtsgängen ("1" bis "9") und einem Rückwärtsgang ("R"), wobei unter den sechs Schaltelementen vier reibschlüssige (B, C, D, E) und zwei formschlüssige Schaltelemente (A, F) sind, wobei zum Herstellen eines Kraftflusses in der Getriebevorrichtung (3) jeweils gleichzeitig drei Schaltelemente in einem geschlossenen Betriebszustand gehalten werden, **dadurch gekennzeichnet, dass** eines der beiden formschlüssigen Schaltelemente (A, F) bei einem angeforderten Betriebszustandswechsel der Getriebevorrichtung (3), während dem das formschlüssige Schaltelement (A) aus einem geschlossenen in einen geöffneten Betriebszustand überführt wird, durch Anheben der Übertragungsfähigkeit wenigstens eines reibschlüssige Schaltelementes (E), welches weder zur Darstellung eines aktuellen Betriebszustandes ("1") noch zur Darstellung eines angeforderten Betriebszustandes ("N") in den Kraftfluss der Getriebevorrichtung (3) zuzuschalten ist, wenigstens annähernd in einen lastfreien Zustand überführt und in diesem in seinen geöffneten Betriebszustand überführt wird.

2. Verfahren nach Anspruch 1, **dadurch gekennzeichnet, dass** die Übertragungsfähigkeit des reibschlüssigen Schaltelementes (E) wenigstens annähernd zum Öffnungszeitpunkt (T4) des formschlüssigen Schaltelementes (A), vorzugsweise auf Null, abgesenkt wird.

3. Verfahren nach Anspruch 1 oder 2, **dadurch gekennzeichnet, dass** die Übertragungsfähigkeit des reibschlüssigen Schaltelementes (E) in Abhängigkeit einer Betriebstemperatur der Getriebevorrichtung (3) variiert wird.

4. Verfahren nach einem der Ansprüche 1 bis 3, **dadurch gekennzeichnet, dass** das formschlüssige Schaltelement (C) bei Vorliegen einer Anforderung für eine Zugrückschaltung zur Darstellung der angeforderten Ziel-Übersetzung ("1" oder "5") abzuschalten ist und vor der Abschaltung durch Anheben der Übertragungsfähigkeit wenigstens eines reibschlüssigen Schaltelementes (B oder D), welches weder zur Darstellung des aktuellen Betriebszustands der Getriebevorrichtung (3) noch zur Darstellung des angeforderten Betriebszustandes in den Kraftfluss der Getriebevorrichtung (3) zuzuschalten ist, in einen wenigstens annähernd lastfreien Betriebszustand überführt wird.

5. Verfahren nach Anspruch 4, **dadurch gekennzeichnet, dass** die Übertragungsfähigkeit eines während der Darstellung der Ist-Übersetzung ("2" oder "6") abgeschalteten und zur Darstellung der angeforderten Ziel-Übersetzung ("1" oder "5") zuzuschaltenden reibschlüssigen Schaltelementes (D oder B) bei Vorliegen einer Getriebeeingangsdrehzahl (n_mot), die wenigstens annähernd einer mit der angeforderten Ziel-Übersetzung ("1" oder "5") korrespondierenden Synchrondrehzahl (n_sync("1") oder n_sync("5")) entspricht, angehoben wird, nachdem das abzuschaltende formschlüssige Schaltelement (C) in seinen geöffneten Betriebszustand überführt wurde.

## Claims

1. Method for operating a transmission device (3) having four planetary gear sets (P1, P2, P3, P4) and six shift elements (A, B, C, D, E, F) for selectively shifting nine forward gearspeeds ("1" to "9") and one reverse gearspeed ("R"), wherein the six shift elements include four friction-fit shift elements (B, C, D, E) and two form-fit shift elements (A, F), wherein in order to bring about a force flux in the transmission device (3) three shift elements are simultaneously held in a closed operating state in each case, **characterized in that** when a change of operating state of the transmission device (3) is requested one of the two form-fit shift elements (A, F) is moved at least approximately into a load-free state, and transferred in this state into its open operating state, during which the form-fit shift element (A) is transferred from a closed operating state into an open operating state by raising the transmission capability of at least one friction-fit shift element (E) which does not have to be connected into the force flux of the transmission device (3) neither to form a current operating state ("1") nor to form a requested operating state ("N").

2. Method according to Claim 1, **characterized in that** the transmission capability of the friction-fit 0 element (E) is preferably reduced to zero, at least approximately at the opening time (T4) of the form-fit shift element (A).

3. Method according to Claim 1 or 2, **characterized in that** the transmission capability of the friction-fit shift element (E) is varied as a function of an operating temperature of the transmission device (3).

4. Method according to one of Claims 1 to 3, **characterized in that** when a request for a traction downshift is present the form-fit shift element (C) is to be switched off in order to form the requested target transmission ratio ("1" or "5"), and before the shifting operation said form-fit shift element (C) is transferred into an at least approximately load-free operating state by raising the transmission capability of at least one friction-fit shift element (B or D) which does not have to be connected into the force flux of the transmission device (3) neither to form the current operating state of the transmission device (3) nor to form the requested operating state.

5. Method according to Claim 4, **characterized in that** the transmission capability of a friction-fit shift element (D or B) which is disconnected during the formation of the actual transmission ratio ("2" or "6") and is to be connected in order to form the requested target transmission ratio ("1" or "5") is raised when a transmission input rotational speed (n_mot) is present which corresponds at least approximately to a synchronizing rotational speed (n_sync("1") or n_sync("5")) which corresponds to the requested target transmission ratio ("1" or "5"), after the form-fit shift element (C) which is to be disconnected has been transferred into its open operating state.

## Revendications

1. Procédé pour faire fonctionner un dispositif de transmission (3) comprenant quatre trains planétaires (P1, P2, P3, P4) et six éléments de commutation (A, B, C, D, E, F) pour commuter de manière sélective entre neuf vitesses de marche avant ("1" à "9") et une vitesse de marche arrière ("R"), parmi les six éléments de commutation, quatre étant des éléments de commutation à engagement par friction (B, C, D, E) et deux étant des éléments de commutation par engagement par correspondance de formes (A, F), trois éléments de commutation étant à chaque fois simultanément maintenus dans un état de fonctionnement fermé pour établir un flux de forces dans le dispositif de transmission (3), **caractérisé en ce que** l'un des deux éléments de commutation par engagement par correspondance de formes (A, F), dans le cas d'une demande de changement d'état de fonctionnement du dispositif de transmission (3), pendant lequel changement d'état l'élément de commutation par engagement par correspondance de formes (A) est transféré d'un état de fonctionnement fermé dans un état de fonctionnement ouvert, est transféré au moins approximativement dans un état sans charge et, dans celui-ci, est transféré dans son état de fonctionnement ouvert, par augmentation de la capacité de transfert d'au moins un élément de commutation par engagement par friction (E) qui ne doit être enclenché ni pour obtenir un état de fonctionnement actuel ("1") ni pour obtenir un état de fonctionnement demandé ("N") dans le flux de forces du dispositif de transmission (3).

2. Procédé selon la revendication 1, **caractérisé en ce que** la capacité de transfert de l'élément de commutation par engagement par friction (E) est réduite, de préférence à zéro, au moins approximativement à l'instant d'ouverture (T4) de l'élément de commutation par engagement par correspondance de formes (A).

3. Procédé selon la revendication 1 ou 2, **caractérisé en ce que** la capacité de transfert de l'élément de commutation par engagement par friction (E) est modifiée en fonction d'une température de fonctionnement du dispositif de transmission (3).

4. Procédé selon l'une quelconque des revendications 1 à 3, **caractérisé en ce que** l'élément de commutation par engagement par correspondance de formes (C), en présence d'une demande de rétrogradage en traction pour obtenir le rapport de changement de vitesses cible demandé ("1" ou "5") doit être déconnecté et, avant la déconnexion, par augmentation de la capacité de transfert d'au moins un élément de commutation par engagement par friction (B ou D) qui ne doit être enclenché ni pour obtenir un état de fonctionnement actuel du dispositif de transmission (3) ni pour obtenir l'état de fonctionnement actuel demandé dans le flux de forces du dispositif de transmission (3), est transféré dans un état de fonctionnement au moins approximativement sans charge.

5. Procédé selon la revendication 4, **caractérisé en ce que** la capacité de transfert d'un élément de commutation par engagement par friction (D ou B) déconnecté lors de l'obtention du rapport de transmission actuel ("2" ou "6") et devant être enclenché pour obtenir le rapport de transmission cible demandé ("1" ou "5"), en présence d'un régime d'entrée de la transmission (n_mot) qui correspond au moins approximativement à un régime synchrone (n_sync("1") ou n_sync("5")) correspondant au rapport de transmission cible demandé ("1" ou "5") est augmentée après que l'élément de commutation par engagement par correspondance de formes (C) devant être déconnecté a été transféré dans son état de fonctionnement ouvert.
